**Europäisches Patentamt**

(19) **European Patent Office**

**Office européen des brevets**

(11) **EP 1 012 534 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.$^7$: **G01B 9/02**, G01B 11/16

(21) Anmeldenummer: **97952881.7**

(86) Internationale Anmeldenummer:
**PCT/EP97/06791**

(22) Anmeldetag: **03.12.1997**

(87) Internationale Veröffentlichungsnummer:
**WO 98/25104 (11.06.1998 Gazette 1998/23)**

(54) **VERFAHREN UND VORRICHTUNG ZUR ERMITTLUNG VON VERFORMUNGEN UND DEHNUNGEN AN GEKRÜMMTEN KÖRPERN**

METHOD AND DEVICE FOR DETERMINING DEFORMATIONS AND ELONGATIONS ON CURVED OBJECTS

PROCEDE ET DISPOSITIF POUR LA DETERMINATION DE DEFORMATIONS ET D'ALLONGEMENTS SUR DES CORPS CURVILIGNES

(84) Benannte Vertragsstaaten:
**DE FR GB IT**

(30) Priorität: **04.12.1996 DE 19650325**

(43) Veröffentlichungstag der Anmeldung:
**28.06.2000 Patentblatt 2000/26**

(73) Patentinhaber: **Ettemeyer AG**
**89231 Neu-Ulm (DE)**

(72) Erfinder: **ETTEMEYER, Andreas**
**D-89231 Neu-Ulm (DE)**

(74) Vertreter: **Alber, Norbert, Dipl.-Ing. et al**
**Albert-Rosshaupter-Strasse 65**
**81369 München (DE)**

(56) Entgegenhaltungen:
**EP-A- 0 347 911        EP-A- 0 485 728**
**EP-A- 0 731 335        DE-A- 4 102 881**

# EP 1 012 534 B1

**Beschreibung**

Die flächenhafte Ermittlung von Verlagerungen eines Anteiles oder auch der gesamten Oberfläche eines Objektes, auch eines beliebig geformten dreidimensionalen Körpers ist eine für viele industriell relevante Fragestellungen wesentliche Aufgabe. So ergibt sich beispielsweise eine teilweise Verlagerung der Oberfläche eines Objektes, z. B. bei der Prüfung von Bauteilen auf mögliche Schwachstellen, zur Beanspruchungsanalyse komplexer Systeme, bei der Überprüfung von Bauteilen auf Einhaltung bestimmter Spannungsgrenzwerte, indem ein beobachteter Körper durch Beanspruchung, z. B. Druckbeaufschlagung, sich im Bereich einer Schwachstelle seiner Wandung oder seines Schichtaufbaus an der Oberfläche geringfügig ausdehnt, oder ein Hohlkörper aufgrund Druckbeanspruchung sich auch vollständig dehnt.

Bekannte Dehnungsmeßverfahren sind entweder sehr aufwendig in der Applikation (z. B. Dehnungsmeßstreifen - nur punktuelle Messung, Oberflächenschichtverfahren), sehr ungenau (Reißlackverfahren) oder nur unter besonderen Bedingungen einsetzbar (zyklische Belastung bei Thermoemissionsanalyse).

Die Speckle-Interferometrie erlaubt die berührungslose und flächenhafte Erfassung von Verlagerungen und/ oder Verformungen an beliebigen Bauteilen. Es sind 2D- und 3D-Speckle-Interferometer bekannt, mit denen die Verformung in zwei oder drei Koordinatenachsen ermittelt werden kann. Dazu werden die Komponenten der Verlagerung von Punkten der Oberfläche in einer oder mehreren Richtungen mit dem Speckle-Interferometer gemessen für sehr viele Punkte miteinander in das Koordinatensystem des Objektes oder ein Raumkoordinatensystem umgerechnet. Dies wird anhand der Figuren näher erläutert.

So zeigt EP-A-0 731 335 bereits ein solches Verfahren zum Feststellen unerwünschter Verformungen eines Objekts, die meist unter Belastung auftreten, bei der die Speckle-Interferometrie nach der speziellen Methode der Shearographie angewandt wird. Dabei wird die Gestalt des Objektes jedoch nicht bestimmt. Die Vorrichtung weist zwei getrennte Kameras sowie einen zweiarmigen Mach-Zehnder-Interferometer auf.

Weiterhin beschreibt die DE-A-41 02 881 ebenfalls ein Verfahren zur Feststellung von Verformungen mittels Speckle-Interferometrie, wobei die Besonderheit darin liegt, daß die für 3D-Verformungen notwendigen Beleuchtungen aus unterschiedlichen Richtungen mit Licht unterschiedlicher Eigenschaften (Wellenlänge, Polarisation etc.) verwendet wird, um die auf den unterschiedlichen Beleuchtungsrichtungen basierenden Aufnahmen zeitgleich durchführen zu können, was insbesondere für die Feststellung von Verformungen an Objekten notwendig ist, deren Verformungen nicht zum Stillstand kommen bzw. die während der Verformung beobachtet werden sollen. Für die genaue Bestimmung des dreidimensionalen Verlagerungsvektors ist jedoch die Kenntnis der Objektgeometrie und der relativen Lage zum Speckle Interferometer wünschenswert.

Die Geometrie des Objektes kann entweder manuell eingegeben werden oder mit einem anderen Meßinstrument meßtechnisch erfaßt werden, z. B. mit einem Streifenprojektionssystem. Dabei wird die Oberfläche eines Körpers mit einem regelmäßigen Muster, insbesondere einem einfachen Streifenmuster, bestrahlt, was ein verändertes Muster auf der Oberfläche des Körpers ergibt. Bestrahlt man beispielsweise eine Kugel mit einem solchen Streifenmuster, so entstehen auf der Oberfläche der Kugel linsenförmig nach außen immer stärker gekrümmte Linien.

Aufgrund Kenntnis der geometrischen Daten des Bestrahlungsmusters sowie des Abstandes zum Objekt läßt sich daraus die Form der Oberfläche des Objektes berechnen.

Der Nachteil dieser Vorgehensweise ist der hohe finanzielle Aufwand für die Bereitstellung zweier unterschiedlicher aufwendiger Meßsysteme für die Verlagerungsmessung und die Formerfassung.

Es ist daher die Aufgabe der vorliegenden Erfindung, ein Verfahren sowie eine zugehörige Vorrichtung zu schaffen, mit der sowohl die Formerfassung als auch die Verlagerungsmessung und daraus errechnet die Dehnung und die Spannung, insbesondere unter Verwendung teilweise identischer Arbeitsschritte, durchgeführt werden kann.

Dieses Problem wird durch die Merkmale der Ansprüche 1 und 12 gelöst.

Dies ist dadurch möglich, daß bei der Speckle-Interferometrie zur Verlagerungsmessung ohnehin einerseits für den Ausgangszustand und andererseits für den Meßzustand des Objektes jeweils die Phasendifferenz zwischen zwei auf dem gleichen Bildpunkt der lichtsensitiven Meßfläche der Kamera, in der Regel einem CCD-Chip, auftreffenden Lichtwellen ermittelt wird, und der Differenzwert zwischen den beiden Phasenunterschieden Rückschlüsse auf die Verlagerung des entsprechenden Objektpunktes zuläßt. Dies wird nicht nur für einen Einzelpunkt, sondern für alle einzeln durch die lichtsensitive Schicht der Kamera unterscheidbaren Punkte durchgeführt, und ermöglicht damit auch Aussagen über die gesamte Beobachtungsfläche, also über jeden einzelnen unterscheidbaren Punkt auf der Oberfläche des Objektes im Beobachtungsbereich.

Verwendet man anstelle des Meßzustandes, in dem das zu vermessende Objekt in irgendeiner Form kraftbeaufschlagt oder verlagert ist, den Ausgangszustand des Objektes, ändert jedoch beobachtungsseitige Parameter, beispielsweise durch Verändern der Beleuchtungsrichtung, und/oder Verändern der Beobachtungsrichtung und/oder Verändern der Entfernung der Beleuchtungseinheit und/oder der Beobachtungseinheit und/oder der dabei eingesetzten Umlenkspiegel und/oder die Wellenlänge des verwendeten Lichts, so läßt sich durch Vergleich zweier sich durch diese Parameter unterscheidender Meßschritte, jeweils jedoch am gleichen, im Ausgangszustand belassenen Objekt die Relativlage einzelner Punkte auf der Oberfläche des Objekts zueinander - und bei massenhafter Bestimmung solcher Relationen der Oberflächenpunkte - die Form der gesamten Oberfläche im Beobachtungsbereich ermitteln.

Damit ist für denjenigen Zustand, in welchem die Ermittlung der Form des Objektes erfolgte - in der Regel der Ausgangszustand - die Form des Objekts bekannt, und zusätzlich die Verlagerung jedes einzelnen der ermittelten Oberflächenpunkte durch die Veränderung des Objekts zwischen Ausgangszustand und Meßzustand, wobei letzterer in der Regel ein kraftbeaufschlagter Zustand ist.

Diese Verlagerung jedes einzelnen Punktes liegt als Vektor, also angegeben durch die drei Teilvektoren in den drei Raumrichtungen x, y und z, vor. Diese Angabe, rasterartig für jeden beobachteten Punkt der Oberfläche angegeben, soll als Verlagerungsfeld bezeichnet werden. Dabei ist die Dehnung in einem bestimmten Punkt der Oberfläche des Objekts der Unterschied der Verlagerung dieses Punktes - zwischen Ausgangszustand und Meßzustand - gegenüber den Verlagerungen der benachbarten Punkte.

Um in einem kraftbeaufschlagten Objekt, beispielsweise einem druckbeaufschlagten Hohlkörper, die dort durch die Beaufschlagung auftretenden Spannungen und Dehnungen zu ermitteln, ist die Verlagerung jedes einzelnen Punktes der Oberfläche, angegeben in Raumkoordinaten, jedoch nicht ausreichend. Vielmehr muß für die Dehnung die Verlagerung jedes Oberflächenpunktes einerseits lotrecht zur Oberfläche und andererseits tangential zur Oberfläche in diesem Punkt, bei ebenen Oberflächen also in Richtung der Oberfläche, aufgeteilt werden. Dies ist nur möglich, wenn im jeweiligen Punkt die Form der Oberfläche bekannt ist.

Daher wird der für jeden Punkt bekannte Verlagerungsvektor unter Berücksichtigung der insgesamt bekannten und damit auch für diesen Oberflächenpunkt bekannten Form des Objekts in die lotrechten und tangentialen Verlagerungsvektoren bezüglich der Oberfläche umgerechnet, wodurch nach Umrechnung (Differenzierung) die Dehnung bestimmt werden kann. Über alle beobachteten Punkte der Oberfläche des Objekts wird dies als Dehnungsfeld bezeichnet.

Da die Dehnung das Ergebnis der im Objekt, insbesondere in der Objektoberfläche - beim Übergang vom Ausgangszustand zum in der Regel belasteten Meßzustand - auftretenden Spannungen ist, die durch die Materialeigenschaften, insbesondere den Elastizitätsmodul des Materials des Objektes-sich in einer bestimmten Dehnung äußert, wird aus dem Dehnungsfeld unter Berücksichtigung des Elastizitätsmoduls nun das Spannungsfeld ermittelt. Hierzu wird die für jeden Punkt bekannte Dehnung, aufgeteilt in lotrechte und tangentiale Dehnungsvektoren - unter Berücksichtigung des Elastizitätsmoduls - die Spannungswerte hinsichtlich Betrag und Richtung für den jeweiligen Punkt errechnet, die z. B. bei einem Hohlkörper insbesondere in Richtung der Oberfläche vorhanden sein können, und nicht quer hierzu.

Ausführungsformen gemäß der Erfindung sind im folgenden anhand der Figuren beispielhaft näher beschrieben. Es zeigen:

Fig. 1a: Prinzipdarstellung der Electronic Speckle Pattern Interferometrie (ESPI), mit dem Meßobjekt im Ausgangszustand,

Fig. 1b: eine Darstellung gemäß Fig. 1a mit Meßobjekt im belasteten Zustand,

Fig. 1c: eine geometrische Situation,

Figuren 2a und 2b: Fleckenbilder der Einzelmessungen,

Fig. 2c: Differenzbild aus 2a und 2b,

Fig. 2d: ein Gleichungssystem,

Fig. 3: eine Prinzipdarstellung der ESPI mittels dualer Beleuchtung,

Fig. 4: eine Prinzipdarstellung der ESPI mittels Shearing der Objektpunkte,

Fig. 5: eine Prinzipdarstellung einer dreidimensionalen ESPI-Meßvorrichtung,

Fig. 6: Prinzipdarstellung von Speckle-Streifenmustern, und

Fig. 7 und 8: Prinzipdarstellung der Anordnung der Meßeinheit zum Objekt.

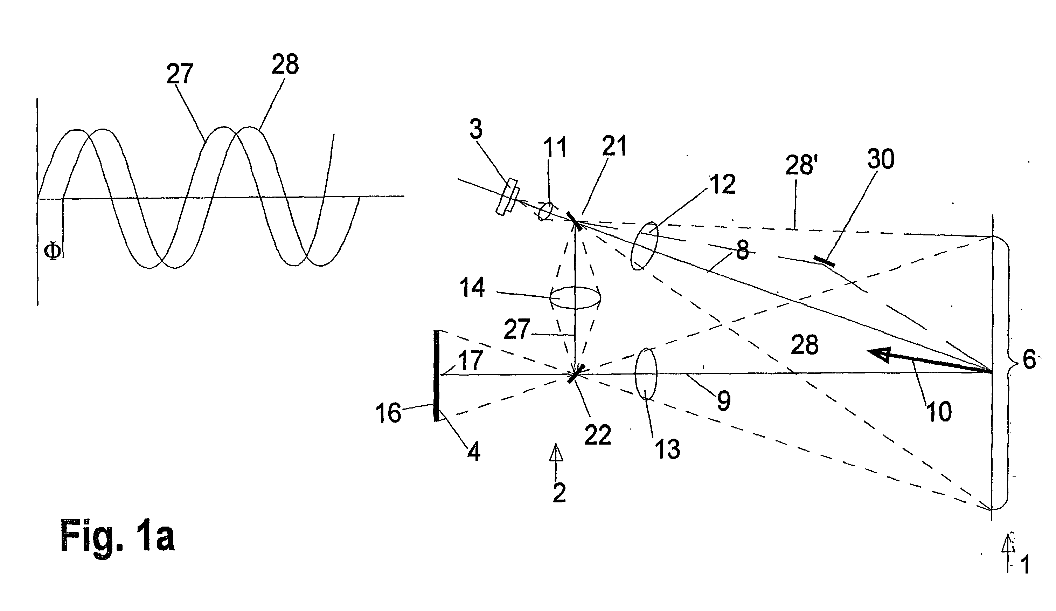

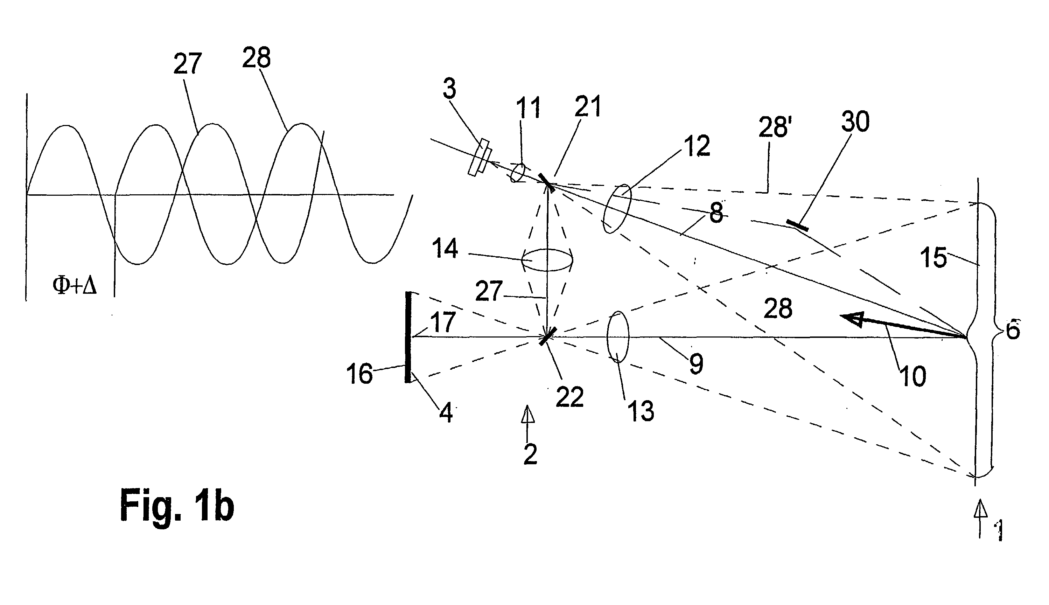

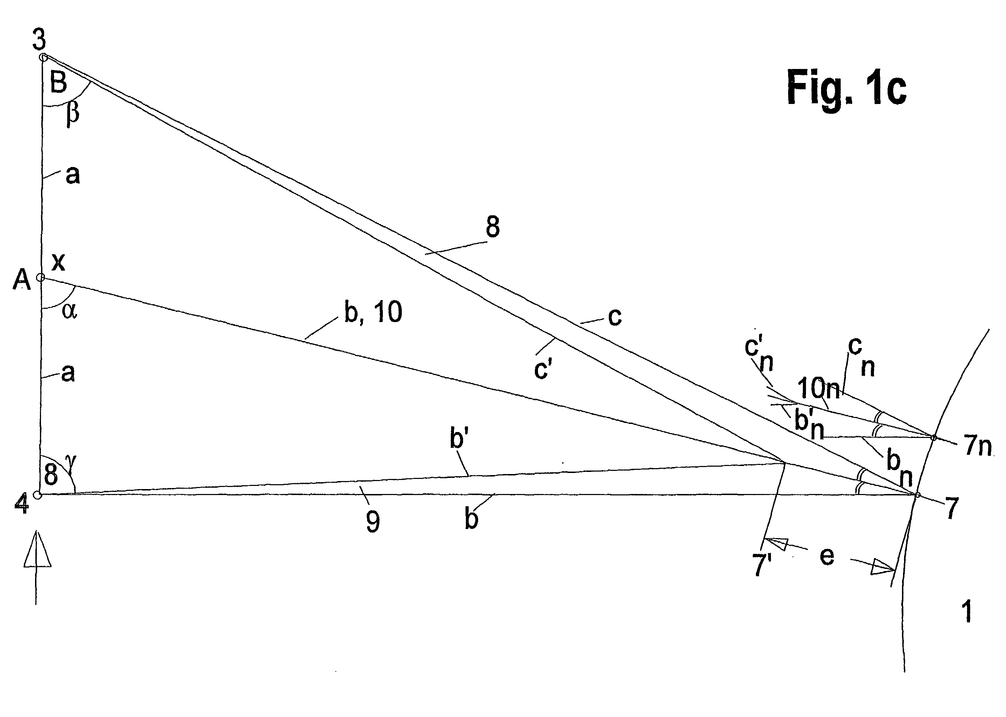

Zunächst wird im folgenden anhand der Figuren 1 bis 5 die Ermittlung der relativen Verlagerung von Punkten auf der Oberfläche des Meßobjektes 1 zwischen dem Ausgangszustand bzw. Normal zustand einerseits und dem Meßzustand, also einem Zustand, in dem das Meßobjekt 1 mit einer Kraft beaufschlagt oder verlagert wurde, andererseits erläutert, wie es nach dem ESPI Stand der Technik ist.

In der Regel ist der Meßzustand dabei ein belasteter Zustand des Meßobjekts 1, indem sich die Oberfläche des Meßobjekts 1 insgesamt, z. B. aufgrund Druckbeanspruchung, der Meßeinheit 2 annähert, oder auch sich von dieser entfernt (z. B. aufgrund Zugbeanspruchung parallel zur beobachteten Oberfläche des Meßobjekts). Ebenso sind auch partielle Verlagerungen der Oberfläche des

Meßobjektes möglich, indem z. B. im Meßzustand kleine Aufwölbungen auf der Objektoberfläche auftreten, wie in Fig. 1b zu erkennen. Demgegenüber zeigt Fig. 1a die Situation im Ausgangszustand des Meßobjekts 1. Bis auf die in Fig. 1b ersichtliche Aufwölbung ist die Relativposition zwischen Meßobjekt und Meßeinheit die gleiche.

Das Grundprinzip der Electronic Speckle Pattern Interferometrie, im folgenden kurz ESPI genannt, soll zunächst anhand der Figuren 1a und 1b beschrieben werden:

Dabei wird ein Beobachtungsbereich 6 auf der Oberfläche des Meßobjektes 1 mit Licht gleicher Wellenlänge, insbesondere einem Laser 3, in Beleuchtungsrichtung 8, direkt oder über mindestens einen Umlenkspiegel 30, bestrahlt. Die von der Objektoberfläche zurückgeworfenen Lichtstrahlen werden in einer hiervon unterschiedlichen Beobachtungsrichtung 9 von einer Kamera 4, in der Regel einem hochauflösenden, flächigen CCD-Sensor, aufgenommen. Für jeden einzelnen Objektpunkt der Oberfläche im Beobachtungsbereich 6 des Meß-objektes 1 trifft somit eine Lichtwelle, die Objektwelle 28, auf der Kamera 4 auf, welche beim Auftreffen auf die Kamera eine bestimmte Phasenlage, entsprechend der durchlaufenen Gesamtweglänge von dem Laser 3 bis zur Kamera 4 und der verwendeten Wellenlänge, aufweist. Die Gesamtweglänge der Objektwelle ist jedoch nicht absolut bekannt.

Auf der Kamera 4 trifft weiterhin eine Referenzwelle 27 auf, die ebenfalls vom Laser 3 stammt und damit die gleiche Wellenlänge besitzt, jedoch bei ihrem Auftreffen auf der Kamera 4 in einer von der Objektwelle 28 unterschiedlichen Phasenlage auftreffen kann aufgrund eines anderen Laufweges. Die Referenzwelle 27 wurde nicht vom Meßobjekt reflektiert und ist insbesondere aus dem Beleuchtungsstrahl für das Objekt mittels eines halbdurchlässigen, zur Beleuchtungsrichtung 8 schräg gestellten, ersten Spiegels 21, welcher sich zwischen dem Laser 3 und dem Meßobjekt 1 befindet, abgezweigt, und wird über einen zweiten halbdurchlässigen Spiegel 22, welcher sich quer zur Beobachtungsrichtung 9 verlaufend auf dieser Beobachtungsrichtung 9 befindet, ebenfalls auf die Kamera 4 geleitet.

Für die Mittelstrahlen des kegelförmigen oder zylindrischen Bündels von Beleuchtungsstrahlen und reflektierten Strahlen ist dies in den Figuren für einen bestimmten Objektpunkt 7 eingezeichnet, welcher als Abbildungspunkt 17 auf der lichtempfindlichen Fläche der Kamera 4 abgebildet wird.

Das Gleiche geschieht auch für jeden anderen Punkt der Oberfläche des Beobachtungsbereiches 6 der Oberfläche des Meßobjektes 1, wobei jeder Punkt des Beobachtungsbereiches 6 einem Punkt auf der lichtempfindlichen Fläche des Kamera 4 entspricht.

Im folgenden sind alle Vorgehensweisen immer nur bezogen auf den mittigen Objektpunkt 7 und den mittigen Abbildungspunkt 17 beschrieben, gleiches trifft jedoch auch für alle anderen Punkte des Beobachtungsbereiches 6 sowie der lichtempfindlichen Fläche 16 der Kamera 4 zu, da sowohl die Beleuchtung als auch die Beobachtung nicht nur mittels eines einzelnen Lichtstrahles bzw. Lichtquelle, sondern jeweils mittels eines Bündels erfolgt, so daß eine flächenhafte Beobachtung des Meßobjektes gegeben ist.

Auf dem Abbildungspunkt 17 der Kamera treffen somit eine Referenzwelle 27 sowie eine Objektwelle 28 auf, die sich in der Regel in ihrer Phasenlage beim Auftreffen im Abbildungspunkt 17 durch eine Phasendifferenz $\Phi$ unterscheiden, und nur zufällig die Phasendifferenz 0 aufweisen können.

Beispielsweise hat dabei die Objektwelle 28 vom Laser 3 bis zur Kamera 4 eine Weglänge von x+0,1 mal die verwendete Wellenlänge $\lambda$ zurückgelegt, die Referenzwelle 27 dagegen einen Weg von y+0,3 mal die verwendete Wellenlänge $\lambda$. Die Phasendifferenz $\Phi$ beträgt demnach 0,2. x und y, die ganzzahligen Vielfachen der Wellenlänge, sind nicht bekannt und werden auch nicht erfaßt.

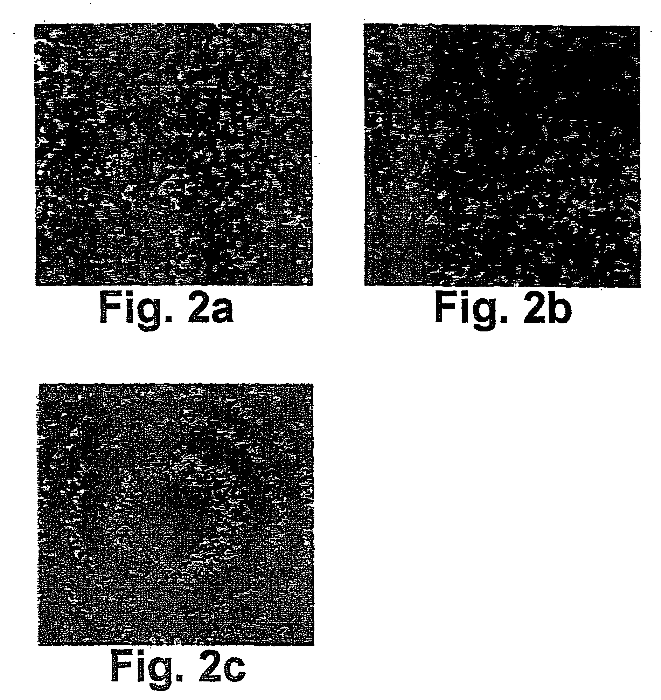

Diese Phasendifferenz $\Phi$ ist für jeden der Abbildungspunkte auf der lichtempfindlichen Fläche 16 der Kamera 4 eine andere, und entsprechend ist jeder Abbildungspunkt mehr oder weniger hell. Für die gesamte lichtempfindliche Fläche 16 ergibt dies ein unregelmäßiges Fleckenbild mit hellen und dunklen Bereichen, wie in Fig. 2a dargestellt.

Führt man den gleichen Vorgang, wie er eben für ein Meßobjekt 1 im Ausgangszustand beschrieben wurde, für den Meßzustand des Meßobjekts 1 gemäß Fig. 1b durch, so hat sich der Objektpunkt 7 aufgrund einer Aufwerfung der Meßobjektoberfläche in diesem Bereich der Meßeinheit 2 gegenüber dem Ausgangszustand etwas angenähert, so daß die Objektwelle 28' auf dem Abbildungspunkt 17 nunmehr in einer anderen Phasenlage, entsprechend dem veränderten kürzeren Laufweg der Objektwelle, auftrifft. Die Referenzwelle 27' ist dagegen mit der Referenzwelle 27 der Messung im Ausgangszustand identisch, da sich der Laufweg der Referenzwelle nicht geändert hat.

Somit ergibt sich nunmehr zwischen Referenzwelle 27' und Objektwelle 28' im Abbildungspunkt 17 die Meß-Phasendifferenz $\Phi + \Delta$, die sich folglich im Abbildungspunkt 17 der lichtempfindlichen Fläche 16 auch in seiner Helligkeit gegenüber der im Ausgangszustand erhaltenen Normal-Phasendifferenz $\Phi$ unterscheidet.

Im Meßzustand ergibt sich somit für die gesamte lichtempfindliche Fläche 16 ein qualitativ etwa gleiches, im Detail z. B. in Anordnung der Flecken jedoch anderes Fleckenbild, wie in Fig. 2b dargestellt.

Der Differenzwert Δ, also der Unterschied zwischen der Normal-Phasendifferenz Φ und der Meß-Phasendifferenz Φ + Δ zwischen der Messung im Ausgangszustand und der Messung im Meßzustand in einem bestimmten Abbildungspunkt 17 entspricht somit - bei kleinen Verlagerungen des Objektpunktes 7 zwischen Ausgangszustand und Meßzustand - der veränderten Laufweglänge der Objektwelle zwischen Ausgangszustand und Meßzustand.

Aufgrund der Winkelbeziehungen im Dreieck - wie in Fig. 1c dargestellt - läßt sich die Verlagerung e des Objektpunktes 7 zwischen dem Ausgangszustand (7) und dem Meßzustand (7') in Meßrichtung 10 ermitteln:

Das durch den Laser 3, die Kamera 4 und den Objektpunkt 7 bzw. 7' gebildete Dreieck läßt sich durch die Winkelhalbierende vom Objektpunkt 7 aus, welches die Meßrichtung 10 darstellt, in zwei Dreiecke aufteilen, wobei der Winkel α, unter dem die Meßrichtung 10 auf die Verbindungslinie zwischen Laser 3 und Kamera 4 auftrifft, durch die Geometrie der Anordnung von Laser und Kamera zueinander bekannt ist, und grob auch die Winkel β and γ, die die Orientierung von Laser und Kamera darstellen.

Auch die Länge der Dreiecksseite a ist bekannt, nämlich der halbe direkte Abstand zwischen Laser 3 und Kamera 4. Da femer bekannt ist, daß der Unterschied zwischen den Dreiecksseiten c und c' dem halben Differenzwert Δ/2 entspricht, läßt sich über die Winkelbeziehungen im Dreieck die Verlagerungs-komponente e des Objektpunktes 7 in Meßrichtung 10 auf den Objektpunkt 7' im Meßzustand berechnen.

Dabei ist immer unterstellt, daß die Verlagerung e kleiner ist als die Hälfte des Differenzwertes, Δ/2. Falls die Verlagerung e größer ist, lassen sich die zusätzlichen ganzzahligen Vielfachen von λ bzw. λ/2 aus dem Vergleich mit Nachbar-Punkten ermitteln.

In der Praxis erfolgt dies für nicht nur einen Abbildungspunkt 17 auf der Kamera, sondern die gesamte lichtempfindliche Fläche 16 der Kamera, indem die Fleckenbilder aus dem Ausgangszustand und aus dem Meßzustand gemäß den Figuren 2a und 2b voneinander subtrahiert werden, indem für jeden Punkt der lichtempfindlichen Fläche 16 der Lichtwert aus dem Meßzustand vom Lichtwert aus dem Ausgangszustand abgezogen wird. Dies ergibt für die lichtempfindliche Fläche 16 insgesamt dann ein Streifenbild wie in Fig. 2c ersichtlich.

Die Tatsache, daß die Differenz zweier unregelmäßiger Fleckenbilder in der Subtraktion voneinander ein regelmäßiges, streifenförmiges, Bild ergibt, liegt daran, daß sich zwischen Ausgangszustand und Meßzustand eng nebeneinander liegende Objektpunkte 7, 7a, 7b ähnlich verlagern, sofern durch den Meßzustand in der Oberfläche des Objektes kein Riß oder harter Absatz erzeugt wird.

Das Streifenbild gemäß Fig. 2c stellt somit ein Differenzbild der Lichtwerte aller Punkte der Kamerafläche dar.

Da die Lichtdifferenzwerte in jedem einzelnen Punkt mittels der an die Kamera, insbesondere einen digital arbeitenden CCD-Sensor, für jeden einzelnen Punkt der lichtempfindlichen Fläche 16 den Differenzwert Δ ermitteln lassen, ist es möglich, aufgrund des Streifenbildes gemäß Fig. 2c durch Auswertung mittels einer Elektronik und einer zugehörigen Software die Berechnung gemäß Fig. 1c, nämlich die Verlagerung jedes einzelnen Objektpunktes in Meßrichtung 10, für jeden Punkt des Beobachtungsbereiches auf der Oberfläche des Meßobjektes 1 durchzuführen.

Aus der vorstehenden Beschreibung wird somit klar, daß es bei ESPI auf das Auftreffen zweier Lichtwellen auf dem gleichen Punkt der Kamera ankommt, wobei die Phasendifferenz zwischen den beiden Wellen im Ausgangszustand und im Meßzustand unterschiedlich ist, und aus dem Differenzwert der beiden Phasendifferenzen die Verlagerung des entsprechenden Objektpunktes ermittelt wird.

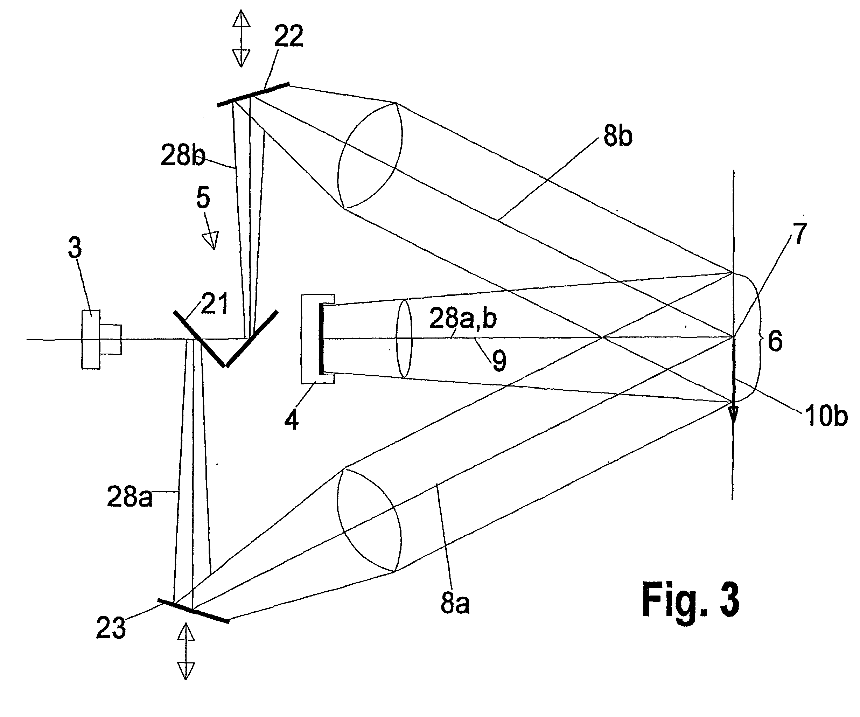

Die beiden benötigten Lichtwellen müssen nicht unbedingt die vom Objekt reflektierte Objektwelle 28 und die Referenzwelle 27 sein. Wie Fig. 3 zeigt, können hierfür auch zwei Objektwellen 28a, 28b verwendet werden, welche durch gleichzeitige Beleuchtung des Beobachtungsbereiches 6 des Objektes 1 aus zwei unterschiedlichen Beleuchtungsrichtungen 8a, 8b erhalten werden.

Die unterschiedlichen Beleuchtungsrichtungen können aus ein und demselben Laser 3 mittels eines Strahlteilers 5 erzielt werden. Der Laser 3 ist dabei in etwa auf den Beobachtungsbereich 6 gerichtet, und durchläuft im Strahtteiler 5 einen ersten halbdurchlässigen Spiegel 21, welcher eine erste Objektwelle 28a seitlich ablenkt, während die verbleibende Welle als zweite Objektwelle 28b in Richtung des Lasers 3 etwas später seitlich, in die Gegenrichtung zur ersten Objektwelle 28a, abgelenkt wird.

Jede der beiden Objektwellen 28a, 28b wird im weiteren Verlauf über einen vollständig undurchlässigen Spiegel 22 bzw. 23 auf den gleichen Beobachtungsbereich 6 gelenkt. Von dort aus werden die Objektwellen 28a, 28b etwa auf der Winkelhalbierenden zwischen den Beleuchtungsrichtungen 8a, 8b auf eine Kamera 4 zurückgeworfen und dort aufgezeichnet, die sich etwa zwischen dem Laser 3 und dem Beobachtungsbereich 6 befindet.

Eine zusätzliche Referenzwelle, die also ohne Objektberührung vom Laser direkt zur Kamera geleitet wird, wird dabei nicht mehr verwendet.

Der wesentliche Unterschied der Vorgehensweise gemäß Fig. 3 gegenüber Fig. 1 liegt jedoch darin, daß durch diese duale Beleuchtung Verlagerungen des Objektpunktes 7 in Beobachtungsrichtung 9, also auf die Kamera 4 zu, nicht ermittelt werden können, da bei Verlagerung des Objektpunktes 7 auf der Beobachtungsrichtung - sofern dies die Winkelhalbierende aus den Beleuchtungsrichtungen 8a und 8b ist - dies auch bei beiden Objektwellen 28a, 28b zum gleichen Phasenversatz und folglich zu einem Differenzwert Δ=0 führen würde.

Mit der Vorgehensweise gemäß Fig. 3 können jedoch Verlagerungen des Objektpunktes 7 quer zur Beobachtungsrichtung 9 zwischen Ausgangszustand und Meßzustand ermittelt werden, da dies die Phasenlage der beiden Objektwellen 28a, 28b unterschiedlich verändert, und somit zu einem Differenzwert $\Delta$ führt, der über die Winkelbeziehungen im Dreieck den Versatz lotrecht zur Beobachtungsrichtung 9, in der durch die beiden Beleuchtungsrichtungen 8a, 8b aufgespannten Ebene, ermitteln läßt.

Die Meßrichtung 10b der dualen Beleuchtungsmethode gemäß Fig. 3 steht somit quer, insbesondere lotrecht, zur Beobachtungsrichtung 9 und in der Ebene, welche durch die beiden Beleuchtungsrichtungen 8a, 8b aufgespannten Ebene. Die Beobachtungsrichtung 9 ist wiederum insbesondere die Winkelhalbierende zwischen den beiden Beleuchtungsrichtungen 8a und 8b.

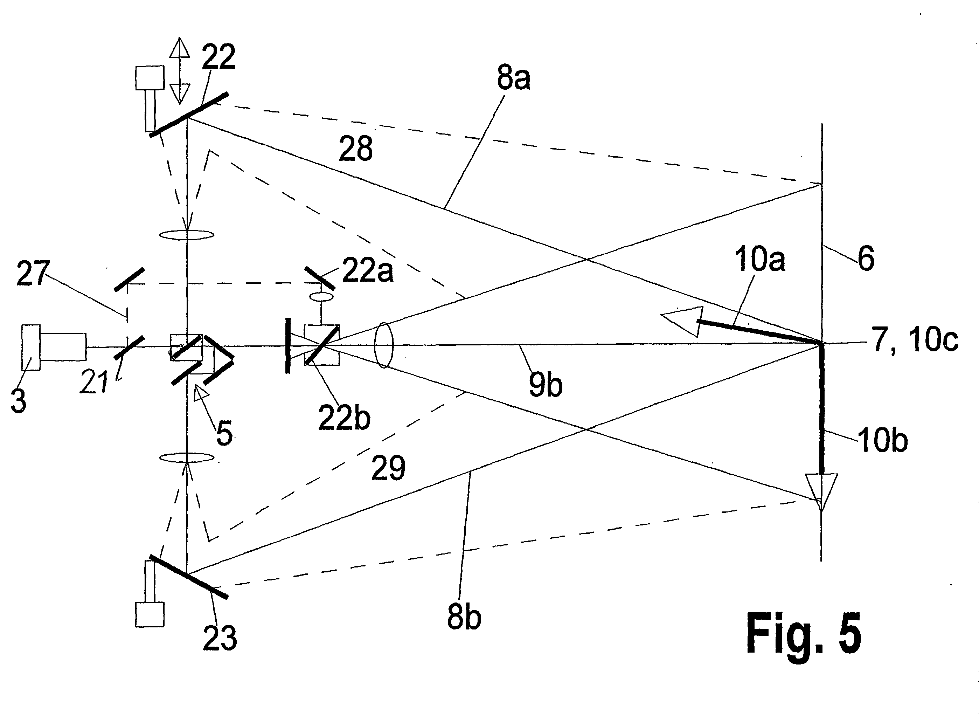

Fig. 5 zeigt eine Einrichtung, die die Vorrichtungen und Vorgehensweisen aus den Figuren 1 und 3 kombiniert:

Einerseits wird durch zwei aus unterschiedlichen Richtungen erfolgende Beleuchtungen eine Verlagerung in einer Meßrichtung 10b quer zur Beobachtungsrichtung 9b, in der Regel der Winkelhalbierenden zwischen den beiden Beleuchtungsrichtungen 8a und 8b, mithin also in der Regel in Richtung der Objektoberfläche, ermittelt.

Andererseits wird die Verlagerung des gleichen Objektpunktes 7 in einer Meßrichtung 10a ermittelt, die zur Meßrichtung 10b im Winkel steht, und die Winkelhalbierende zwischen einer der Beleuchtungsrichtungen, z. B. 8a, und der Beobachtungsrichtung 9a = 9b darstellt.

Die hierfür notwendige Referenzwelle 27 wird - zusätzlich zum Strahlteiler 5 - aus dem Lauf der Lichtstrahlen zwischen dem Laser 3 und dem Strahlteiler 5 vorzugsweise vor dem Strahlteiler 5 mittels eines halbdurchlässigen Spiegels 21 abgezweigt, und mittels weiterer Spiegel 22a, 22b wieder direkt und ohne Objektberührung auf die Kamera 4 geleitet.

Wenn zusätzlich die duale Beleuchtung doppelt vorhanden ist, also nicht nur in Form der Beleuchtungsrichtungen 8a und 8b, die in der Zeichenebene der Fig. 5 liegen, sondern durch weitere, nicht dargestellte. Beleuchtungseinrichtungen 8c und 8d, die vorzugsweise im rechten Winkel hierzu liegen, wobei jedoch die daraus resultierende Winkelhalbierende, die Beobachtungsrichtung 9 identisch mit der in Figur 5 eingezeichneten Beobachtungsrichtung 9 identisch ist, ergibt sich neben der in Fig. 5 eingezeichneten Meßrichtung 10b eine weitere Meßrichtung 10c, die ebenfalls lotrecht zur Beobachtungsrichtung und damit vorzugsweise in der Ebene der Objektoberfläche liegt, jedoch im Winkel, insbesondere rechtwinklig, zur Meßrichtung 10b, liegt.

Damit ist die Verlagerung des Objektpunktes 7 des Ausgangszustandes in den Objektpunkt 7' des Meßzustandes in drei voneinander unterschiedlichen Meßrichtungen 10a, 10b, 10c bekannt, wobei es egal ist, ob die Verlagerungen in die drei unterschiedlichen Meßrichtungen 10a, 10b, 10c durch ein und dieselbe Meßvorrichtung oder durch getrennte Meßvorrichtungen oder gar Meßverfahren ermittelt wird.

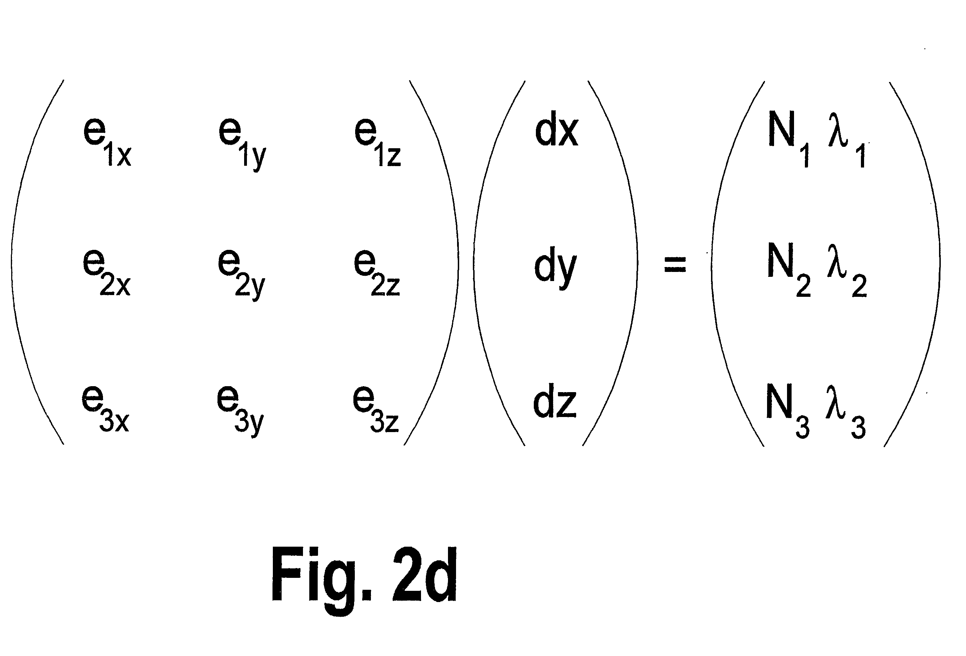

Daraus läßt sich ein Gleichungssystem gemäß Fig. 2d erstellen, wobei die Komponenten $e_{1x}$, $e_{1y}$, $e_{1z}$ die Verlagerungskomponenten des Objektpunktes 7 in der ersten Meßrichtung 10a sind, und N1 den Betrag dieser Verlagerung in Meßrichtung 10a, angegeben in der dabei verwendeten Wellenlänge $\lambda 1$, ist.

Analoges gilt für die zweite und dritte Zeile des Gleichungssystems für die weiteren Meßrichtungen 10b und 10c.

Werden Messungen in mehr als drei verschiedenen Meßrichtungen durchgeführt, ist das Gleichungssystem theoretisch überbestimmt. In der Praxis dienen jedoch die 4. und jede weitere Meßrichtung der Verringerung des Einflusses von Falschmessungen, Signalrauschen etc. und der Verbesserung des Meßergebnisses.

In der Regel wird die bei den Ermittlungen der Verlagerungen in den drei Meßrichtungen verwendete Wellenlänge die gleiche sein, so daß $\lambda 1 = \lambda 2 = \lambda 3$ zu setzen ist, aber zumindest sind $\lambda 1$, $\lambda 2$ und $\lambda 3$ bekannt.

Nach den bekannten Regeln zur Lösung eines Gleichungssystems aus drei Gleichungen mit drei Unbekannten lassen sich damit die Faktoren dx, dy, dz ermitteln, welches die Komponenten in den drei aufeinander senkrecht stehenden Raumrichtungen x, y und z sind, um welche sich ein Objektpunkt 7 aus dem Ausgangszustand in einen Objektpunkt 7' im Meßzustand, also im belasteten Zustand des Meßobjektes, verlagert. Damit ist die relative Verlagerung des Objektpunktes in Raumkoordinaten bekannt.

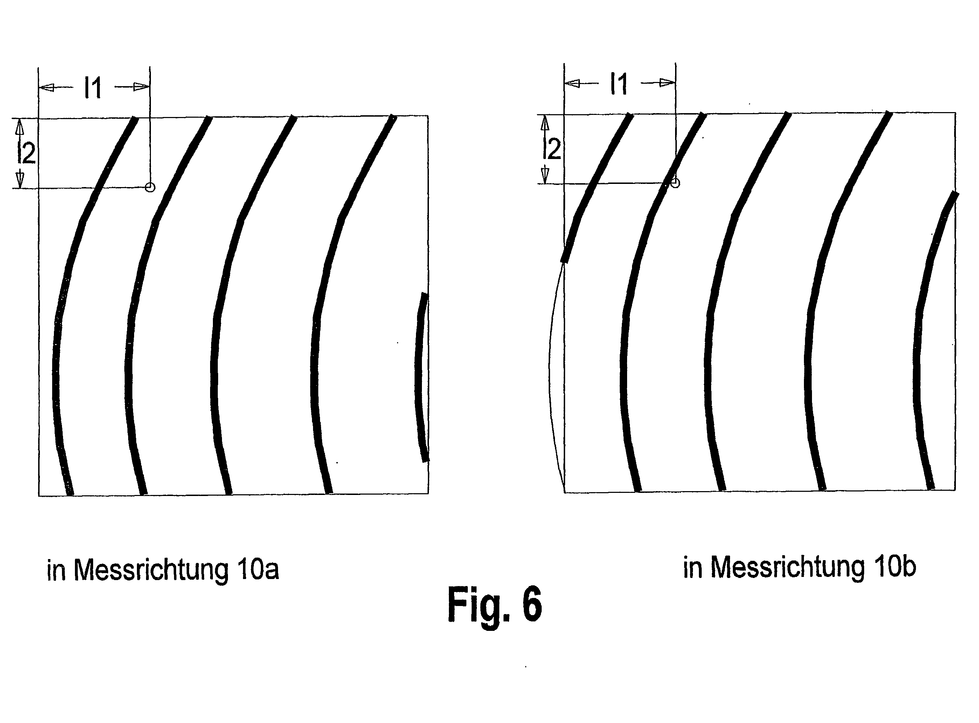

Zum gleichen Ergebnis kann man auch durch Vergleich der drei Streifenbilder, die sich für die drei Meßrichtungen 10a, 10b, 10c jeweils als Differenzbild der Speckle-Patterns ergeben - wie in Fig. 6 dargestellt- , erzielen, wenn die Kamerafläche dabei in ihrer Ausrichtung bezüglich des Objekts die gleiche geblieben ist wie z. B. bei der Anordnung gemäß Fig. 5, mit der 3D-ESPI betrieben wird:

Ein und derselbe Objektpunkt nimmt dabei in den drei Streifenbildern auch immer die gleiche Lage auf der Kamerafläche ein, also beispielsweise horizontal um die Strecke L1 vom linken Rand entfernt und vertikal um die Strecke L2 vom oberen Rand entfernt. Stellt man z. B. fest, daß in Meßrichtung 10a dieser Abbildungspunkt 17 zwischen dem zweiten und dritten Streifen, 10 % vom zweiten Streifen entfernt, angeordnet ist, dagegen im Streifenbild der Meßrichtung 10b zwar zwischen denselben beiden Streifen, aber 80 % vom zweiten Streifen entfernt und bezüglich Meßrichtung 10c genau in der Mitte zwischen dem zweiten und dritten Streifen, so läßt sich damit unter Berücksichtigung der räumlichen Zuordnung der drei Meßrichtungen 10a, 10b, 10c die dreidimensionale Verlagerung des Abbildungspunktes ermitteln, und zwar auch dann, wenn der Objektpunkt in den beiden Streifenbildern zwischen verschiedenen Streifen liegen sollte.

Weiterhin ist zu bedenken, daß alle vorstehenden Überlegungen darauf basiert haben, daß die Verlagerung eines Objektpunktes zwischen dem Ausgangszustand und dem Meßzustand in Meßrichtung, also der Vektor e in Fig. 1c, kleiner als etwa die Hälfte der Wellenlänge des verwendeten Lichts sein soll. Wäre dies nicht sichergestellt, könnte es sein, daß sich die Laufwegslänge des Lichts zwischen Ausgangszustand und Meßzustand nicht nur um den gemessenen Differenzwert $\Delta$, sondern zusätzlich auch um ganzzahlige Vielfache der Wellenlänge $\lambda$ unterschieden hätten.

Ist der Vektor e größer als $\lambda/2$, läßt sich die Verlagerung dennoch ermitteln, wenn für wenigstens einen Objektpunkt im Meßfenster der gesamte Verlagerungsvektor vom Ausgangszustand in den Meßzustand bekannt ist, indem dieser Punkt dann als Vergleichspunkt für Nachbarpunkte dient, und diese wieder für ihre Nachbarpunkte etc.

Ist diese Voraussetzung nicht erfüllt, müssen z. B. mehrere Meßschritte hintereinander durchgeführt werden, also z. B. für den ersten Meßzustand nur eine Teilbelastung des Objektes durchgeführt werden. Der zweite Meßschritt besteht darin, daß der erste Meßzustand, also der Meßzustancl des ersten Meßschrittes, gleichzeitig der Ausgangszustand für den zweiten Meßschritt ist, in welchem wiederum eine weitere Teilbelastung aufgebracht wird, bis die gewünschte Endbelastung erreicht ist.

Die sich daraus für jeden einzelnen Oberflächenpunkt ergebenden Teil-Veriagerungen werden zum Schluß addiert.

Ein weiteres Problem besteht darin, daß - gerade für die Ermittlung der Dehnung und Spannung in der Oberfläche eines Hohlkörpers - die partiellen, überproportionalen Dehnungen in einem bestimmtem Oberflächenbereich, die in der Regel auf Materialfehler zurückzuführen sind und die man gerade deshalb ermitteln will, überlagert werden von der Gesamtdehnung des Hohlkörpers aufgrund der Druckbeaufschlagung.

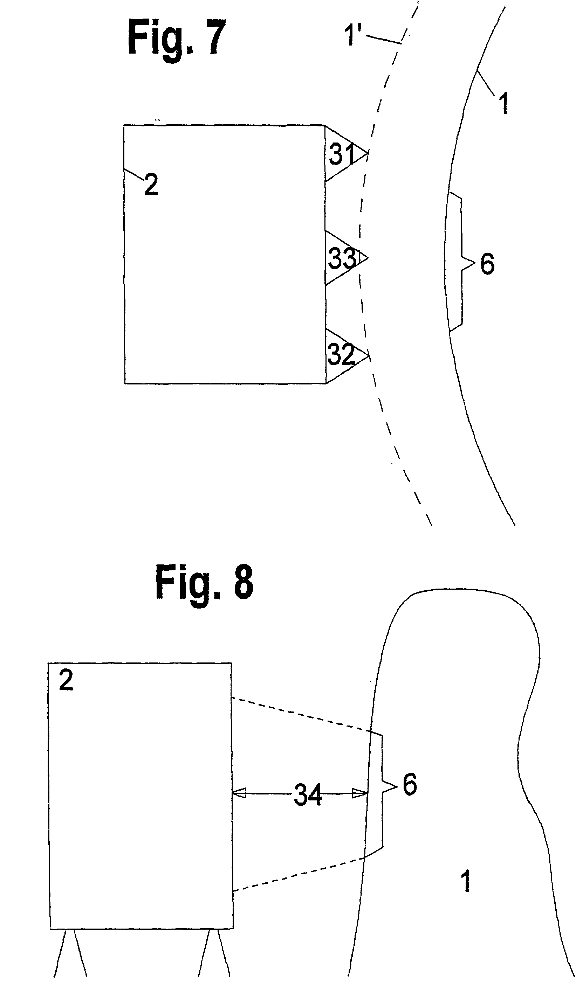

Wie in Fig. 7 dargestellt, verlagert sich jedoch die gesamte Oberfläche des Objektes 1 - aufgrund der Dehnung bei Druckbeaufschlagung des Inneren des hohlen Objektes 1 - relativ stark nach außen, also auf die Meßeinheit 2 zu.

Demgegenüber ist die zusätzliche Verlagerung der Ausbeulung wie in Figur 7 dargestellt aus dem Verlauf der übrigen Oberfläche des Objektes 1 heraus relativ gering.

Die Meßeinheit (2) wird deshalb entweder in einem definierten Abstand 34 zum Objekt 1 und dessen Beobachtungsbereich 6 positioniert (Fig. 8) oder die Meßeinheit 2 wird mit ihren Füßen 31, 32, 33 direkt auf die Oberfläche des Meßobjektes 1 aufgesetzt (Fig. 7), und verbleibt dort auch während des Überganges des Objektes vom Ausgangszustand in den Meßzustand.

Da - bezogen auf den Beobachtungsbereich 6 - sich die Oberfläche des Objektes 1 hinsichtlich ihrer Form nicht ändert, sondern nur zusammen mit der Meßeinheit 3 gegenüber der Mitte des Meßobjektes 1 verlagert wird, wird zwischen Ausgangszustand und Meßzustand von der Meßeinheit 1 de facto nur das Entstehen der Ausbeulung erfaßt.

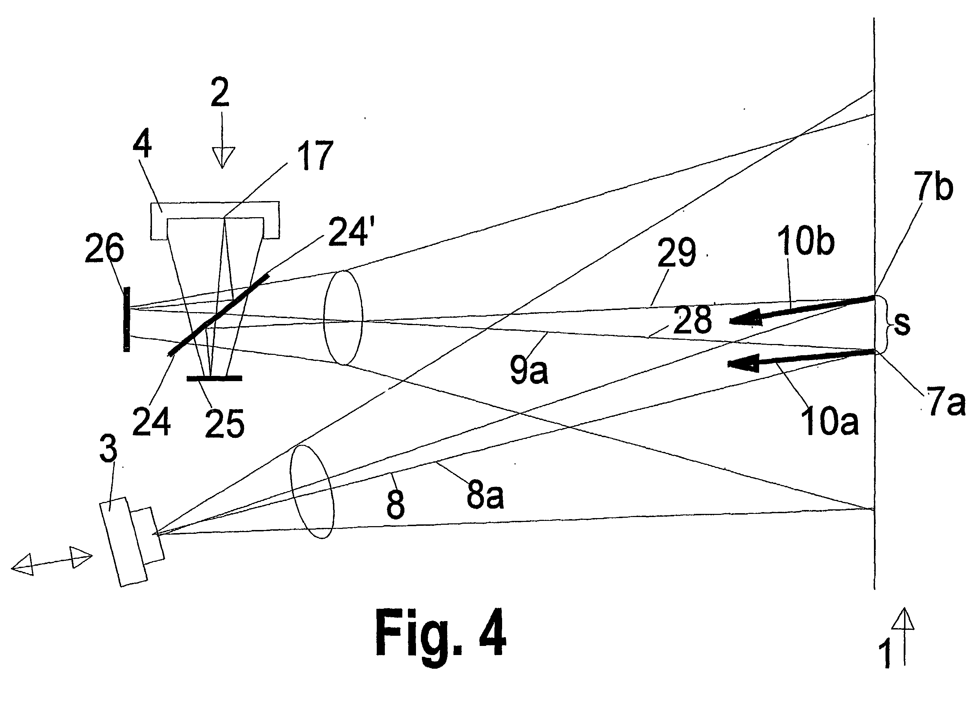

Fig. 4 zeigt eine weitere Vorgehensweise, die sogenannte Shearographie, die alternativ zu der Vorgehensweise mit Objektwelle und Referenzwelle gemäß Fig. 1 eingesetzt werden kann, da sie ebenfalls die Verlagerung eines Objektpunktes in einer Meßrichtung 10a ermitteln läßt, welche die Winkelhalbierende zwischen einer Beleuchtungsrichtung 8a und einer Beobachtungsrichtung 9a ist.

Anstelle einer Referenzwelle werden jedoch auch hier zwei Objektwellen 28, 29 verwendet, die auf dem gleichen Abbildungspunkt 17 der lichtempfindlichen Fläche 16 der Kamera 4 auftreffen.

Allerdings werden diese beiden Objektwellen 28, 29, die in der Regel aus dem gleichen Laser 3 stammen und vor allem die gleiche Wellenlänge besitzen, von zwei unterschiedlichen Objektpunkten 7a, 7b auf der Oberfläche des Objektes 1 reflektiert.

Die beiden Objektpunkte 7a, 7b liegen um die Shearing-Strecke s voneinander entfernt auf der Objektoberfläche, in der Ebene, die durch die Beleuchtungsrichtung 8 und die Beobachtungsrichtung 9 aufgespannt wird.

Die beiden nicht deckungsgleichen und im Winkel zueinander verlaufenden Objektwellen 28, 29, die von den beiden Objektpunkten 7a, 7b reflektiert werden, werden durch entsprechende Umlenkung auf den gleichen Punkt der lichtempfindlichen Fläche 16 der Kamera 4 geleitet, indem beispielsweise im Strahlengang ein halbdurchlässiger Spiegel 24 in einer solchen Schrägstellung angeordnet wird, daß die erste Objektwelle 28 diesen Spiegel durchläuft, die im Winkel hierzu liegende zweite Objektwelle 29 von dem Spiegel abgelenkt wird. Durch weitere Spiegel 25 und 26 ist es dann möglich, die auf diese Art und Weise vollständig getrennten Objektwellen auf den gleichen Abbildungspunkt 17 der Kamera 4 zu richten.

Auch dabei ergibt sich sowohl im Ausgangszustand, als auch im Meßzustand zwischen den beiden Objektwellen 28 und 29 im Abbildungspunkt 17 eine Normal-Phasendifferenz $\Phi$ bzw. eine Meß-Phasendifferenz $\Phi + \Delta$, welche sich um den Differenzwert $\Delta$ unterscheiden.

Da aus der Anordnung der Optik, welche die beiden Objektwellen 28 und 29 auf den gleichen Abbildungspunkt 17 leitet, die Winkeldifferenz zwischen den Objektwellen 28 und 29 bekannt ist, ist - unter Zugrundelegung des Abstandes der Meßeinheit 2 vom Meßobjekt 1 - mit Hilfe geometrischer Regeln auch die Shearing-Strecke s bekannt.

Damit läßt sich ebenfalls nach geometrischen Gesetzmäßigkeiten die unterschiedliche Laufwegslänge der beiden Objektwellen 28 und 29 - sofern der Abstand zwischen Meßeinheit 2 und Objekt 1 nicht bekannt ist, wenigstens relativ zueinander - ermitteln.

Folglich läßt sich aus dem Differenzwert $\Delta$ in analoger Weise die Veltagerung des Objektpunktes 7a bzw. 7b in einer Beobachtungsrichtung 10 bestimmen, deren Richtung für die beiden Objektpunkte 7a, 7b als quasi parallel angenommen werden kann, und aufgrund der sehr kurzen Shearing-Strecke s auch vom Betrag her gleichgesetzt werden kann.

Somit wird klar, daß mit den Methoden der ESPI Verlagerungen von Objektpunkten 7 auf der Oberfläche eines Objektes 1 bestimmt werden können, egal ob diese Verlagerungen aufgrund einer Kraftbeaufschlagung des Objekts oder durch Gesamtverlagerung des Objekts bewirkt werden.

Um jedoch vor einer erfolgenden Verlagerung die Raumform der Objektoberfläche - die für die vorbeschriebenen Vorgehensweisen nur im Beobachtungsbereich 6 als eben angenommen werden kann - zu bestimmen, wird nunmehr erfindungsgemäß vorgeschlagen, in Abwandlung der Vorgehensweisen, und insbesondere unter Benutzung der Einrichtungen, wie sie bei ESPI verwendet werden, auch die Raumform der Oberfläche des Objektes 1 zu bestimmen.

Der Grundgedanke besteht dabei wiederum darin - wie bei ESPI auch - durch Veränderung der Laufweglänge wenigstens einer ersten Objektwelle 28 einen Differenzwert $\Delta$ zu ermitteln, wie vorbeschrieben.

Während bei ESPI der Differenzwert $\Delta$ jedoch dazu dient, die Verlagerung des Objektpunktes 7 des Ausgangszustandes in einen Objektpunkt 7' des Meßzustandes hinsichtlich Richtung und Größe zu ermitteln, kann diese Verlagerungsstrecke des Objektpunktes zwischen Ausgangszustand und Meßzustand gerade als bekannt vorausgesetzt werden, da durch entsprechende Veränderung der Weglänge einer Objektwelle, und/oder gezielter Veränderung des Abstandes der Meßeinheit 2 zum Objekt 1 diese Verlagerung e gerade bekannt ist.

Bezüglich der Vorgehensweise in Fig. 1 gilt damit nach wie vor die geometrische Situation wie in Fig. 1c dargestellt. Für das obere Dreieck ist somit folgendes bekannt:

Die Länge der Dreiecksseite a als halber Abstand zwischen dem Laser 3 und der Kamera 4, der Winkel $\alpha$ am Auftreffpunkt der Beobachtungsrichtung 10 als Winkelhalbierende genau in der Mitte zwischen dem Laser 3 und der Kamera 4 und - aufgrund gezielter Veränderung auf Seiten der Meßeinheit bzw. im Strahlengang der Objektwellen - die Verlagerung e in Meßrichtung 10, also entlang der Dreiecksseite b.

Das Maß der Verlagerung e in Meßrichtung 10 war jedoch diejenige Größe, die bei der Ermittlung der Verlagerung gerade bestimmt werden sollte. Diese Verlagerung e bzw. die mit dieser Verlagerung e korrespondierende Veränderung der Laufweglänge der Objektwelle ist jedoch bereits bekannt, indem sie definiert vorgegeben wird, also beispielsweise die Meßeinheit 2 in Meßrichtung 10 um die Verlagerung e dem Meßobjekt 1 angenähert oder von diesem entfernt wird.

Dennoch ergibt diese - wenn auch definierte - Verlagerung um e wiederum einen Differenzwert $\Delta$.

Für einen vom Objektpunkt 7 benachbarten Objektpunkt 7a stellt man fest, daß die Verlagerung der Meßeinheit 2 um einen bestimmten Betrag in Meßrichtung 10 nicht bei allen Bildpunkten 7, 7a, usw. des Beobachtungsbereiches 6 die gleiche, sondern jeweils leicht voneinander unterschiedliche, Veränderungen des Laufweges der Objektwelle bewirkt.

Dies ist nachvollziehbar, wenn man anhand Fig. 1c erkennt, daß die Meßrichtung 10, die beispielsweise die Verbindung des in der Mitte des Beobachtungsbereiches 6 gelegenen Objektpunktes 7 mit der Mitte der Meßeinheit, also der Winkelhalbierenden zwischen Beleuchtungsrichtung 8 und Beobachtungsrichtung 9, ist, und die Mitte zwischen Laser 3 und Kamera 4 am Fußpunkt A trifft.

Die Verlagerung e ergibt für den Objektpunkt 7 z. B. den Differenzweit $\Delta$.

Für einen benachbarten Objektpunkt 7n ist die Meßrichtung 10n, in der die Verlagerung um den Betrag e erfolgte, nicht mehr exakt die Winkelhalbierende zwischen Beleuchtungsrichtung 8 und Beobachtungsrichtung 9. Folglich bewirkt die Verlagerung in Beobachtungsrichtung 10 um den Betrag e einen Differenzwert $\Delta_n = \Delta + n$, also einen vom Differenzwert $\Delta$ des Objektpunktes 7 um n unterschiedlichen Differenzwert. Dieser Unterschiedsbetrag n repräsentiert jedoch - bezüglich der Meßrichtung 10 - den Unterschied in der Entfernung der Objektpunkte 7 und 7n zur Meßeinheit.

Durch massenhafte Bestimmung dieser Unterschiede werden die Unterschiede in den Abständen - insbesondere gesehen in Meßrichtung - der einzelnen Objektpunkte 7, ..., 7n, ... des Beobachtungsbereiches 6 zur Meßeinheit 2, jedoch jeweils nur in Meßrichtung 10, ermittelt. Damit ist die dreidimensionale Form der Oberfläche bestimmt. Indem zwei oder vorzugsweise sogar drei solcher Messungen aus unterschiedlichen Meßrichtungen durchgeführt werden, läßt sich die Relation jeweils benachbarter Objektpunkte in den drei Raumrichtungen verfeinern.

Durch Aneinanderkoppeln von Beobachtungsbereichen, bis die gewünschte Fläche des Objekts oder die Gesamtoberfläche des Objekts insgesamt abgedeckt ist, kann die gesamte dreidimensionale Form des Objekts bestimmt werden.

Eine Ermittlung des absoluten Abstandes bzw. der Position des Objektes relativ zur Meßeinheit ist damit noch nicht verbunden.

Da auch dies für alle Oberflächenpunkte des Beobachtungsbereiches 6 auf dem Objekt 1 und damit für die diesen Punkten entsprechenden Auftreffpunkte auf der lichtempfindlichen Fläche 16 der Kamera 4 durchgeführt wird, kann die dreidimensionale Form der Oberfläche des Meßobjektes 1 im Raum bestimmt werden.

Bezüglich der einzelnen ESPI-Verfahren wird für die Formermittlung dabei wie folgt vorgegangen:

Bei der Vorgehensweise gemäß Fig. 1 mit einer Referenzwelle 27 und einer Objektwelle 28 wird die Laufwegslänge der Objektwelle 28 verändert. Dies kann durch Abstandsveränderung der gesamten Meßeinheit 2 vom Meßobjekt 1 z. B. in Beobachtungsrichtung 10 um einen definierten Betrag der Verlagerung e geschehen.

Möglich ist es jedoch auch, den Laser 3 mit seiner Beleuchtungsrichtung 8 nicht direkt auf den Beobachtungsbereich zu leiten, sondern in einem flacheren Winkel zur Beobachtungsrichtung 9. Die Objektwelle 28 muß dann - nach Durchlaufen des ersten Spiegels 21 zum Abtrennen der Referenzwelle 27 - gemäß Fig. 1b mittels eines weiteren Umlenkspiegels 30 auf den Objektpunkt 7 umgelenkt werden.

Durch Lageveränderung und/oder Veränderung der Schrägstellung dieses Spiegels 30 um ein definiertes Maß wird auch die Länge des Laufwegs der darüber geführten Objektwelle 28' gezielt verändert.

Ebenso bei der dualen Beleuchtung gemäß Fig. 3, die ohne Referenzstrahl auskommt, kann dort entweder die Lage wenigstens eines der Umlenkspiegel 22, 23, insbesondere deren Abstand quer zur Beobachtungsrichtung, verändert werden, und/oder deren Winkelstellung.

Insbesondere wird bei der Methode der dualen Beleuchtung der Abstand der beiden Umlenkspiegel 22, 23 lotrecht zur Beobachtungsrichtung 9 und um den gleichen Betrag, also jeweils nach rechts oder nach links, bevorzugt. Der Vorteil dieser Vorgehensweise besteht darin, daß dann die sich ergebenden Streifenbilder dem Fachmann anschaulich, in einer Art Höhenlinien, die Gestaltung der Oberfläche des Objektes zeigt.

Bei der Vorrichtung gemäß Fig. 5, die die Vorgehensweisen aus Fig. 1 und Fig. 3 vereint, ist daher wenigstens die Lage und/oder Winkelstellung desjenigen Umlenkspiegels, 22 zu verändern, dessen Objektwelle 28 in Relation zur Referenzwelle 27 gesetzt wird.

Bezüglich der Shearographie, wie in Fig. 4 beschrieben, wird der Differenzwinkel $\delta$ zwischen den beiden Objektwellen 28, 29, und damit die Shearing-Strecke s verändert, vorzugsweise durch Veränderung der Winkelstellung wenigstens des halbdurchlässigen Spiegels 24, und ggf. der weiteren Spiegel 25, 213, 24', wobei der Spiegel 24' in der Regel die Rückseite des Spiegels 24 ist.

Möglich ist jedoch auch die Lageveränderung entweder der gesamten Kameraeinheit, also mit der Optik zum Zusammenführen der Strahlen, in Beobachtungsrichtung, und/oder die Veränderung der Lage des Lasers 3 in Beleuchtungsrichtung 8 und/oder die Veränderung des Winkels zwischen Beobachtungsrichtung 9 und Beleuchtungsrichtung 8.

Darüber hinaus kann anstelle von Veränderungen an der Meßeinheit auch lediglich die Wellenlänge des benutzten Lichts verändert werden, also nacheinander mit unterschiedlichem Licht gemessen werden.

Der Differenzwert $\Delta$ ist immer ein Bruchteil der verwendeten Wellenlänge, also weniger als eine solche Wellenlänge $\lambda$.

Sofern die Normal-Phasendifferenz $\Phi$ mit einer Wellenlänge $\lambda 1$ und die Meß-Phasendifferenz $\Phi + \Delta$ mit einer anderen Wellenlänge $\lambda 2$ ermittelt wurden, bedeutet dies, daß

$$\Phi \cdot \lambda 1 = (\Phi + \Delta) \cdot \lambda 2$$

gelten muß, da keine Veränderung der Laufwegslänge der Objektwellen stattgefunden hat. Ferner gilt für den gesamten Laufweg der Objektwelle 28, welche ebenfalls bei beiden Messungen die gleiche war, - siehe die geometrische Situation in Fig. 1c - daß

$$\Phi \cdot \lambda 1 + X \cdot \lambda 1 = (\Phi + \Delta) \cdot \lambda 2 + Y \cdot \lambda 2$$

Zusammen mit der vorher genannten Gleichung lassen sich X und Y errechnen, womit der Gesamtlaufweg der Objektwelle und über die bekannten Winkel $\alpha$, $\beta$, $\gamma$ gemäß Fig. 1c die Relativlage hinsichtlich Richtung und Abstand des Objektpunktes 7 von dem Laser 3 bzw. der Kamera 4 bekannt ist.

Auch dies wird wiederum für alle Objektpunkte 7 eines Beobachtungsbereiches 6 anhand der diesen Objektpunkten 7 entsprechenden Abbildungspunkten 17 der lichtempfindlichen Fläche 16 der Kamera 4 durchgeführt, womit die Form des Objekts im Beobachtungsbereich 6 bekannt ist. Durch Abtasten mehrerer aneinander grenzender oder gar überlappender Beobachtungsbereiche 6 läßt sich damit - ggf. unter Drehung des Objektes 1 - die dreidimensionale Raumform des Objektes zunächst relativ zur Meßeinheit 2, und bei Bekanntheit deren Position als absolute Raumform ermitteln.

Die Praxisauswertung geschieht dabei anhand der Streifenbilder gemäß Fig. 2c, die jeweils die Differenz zwischen Ausgangszustand und Meßzustand darstellen.

EP 1 012 534 B1

BEZUGSZEICHENLISTE

| | |
|---|---|
| 1 | Meßobjekt |
| 2 | Meßeinheit |
| 3 | Laser |
| 4 | Kamera |
| 5 | Strahlteiler |
| 6 | Beobachtungsbereich |
| 7 | Objektpunkt |
| 8 | Beleuchtungsrichtung |
| 9 | Beobachtungsrichtung |
| 10a, 10b | Meßrichtung |
| 11 | 1. Optik |
| 12 | 2. Optik |
| 13 | 3. Optik |
| 14 | 4. Optik |
| 16 | lichtempfindliche Fläche |
| 17 | Abbildungspunkt |
| 21 | 1. Spiegel |
| 22 | 2. Spiegel |
| 23 | 3. Spiegel |
| 24 | 4. Spiegel |
| 25 | 5. Spiegel |
| 26 | 6. Spiegel |
| 27 | Referenzwelle |
| 28 | 1. Objektwelle |
| 29 | 2. Objektwelle |
| 30 | Umlenkspiegel |
| 31 | Fuß |
| 32 | Fuß |
| 33 | Fuß |
| 34 | Abstand |
| $\Phi$ | Normal-Phasendifferenz |
| $\Phi + \Delta$ | Meß-Phasendifferenz |
| $\Delta$ | Differenzwert |
| e | Verlagerung |
| s | Shearingstrecke |

**Patentansprüche**

**1.** Verfahren zur Ermittlung der Verlagerung wenigstens eines Teiles der Oberfläche eines Meßobjektes (1) zwischen einem Ausgangszustand und einem Meßzustand sowie der Form dieser Oberfläche des Meßobjektes, **dadurch gekennzeichnet, daß** die Ermittlung der Form und die Ermittlung der Verlagerung mit dem gleichen, den Speckle-Effekt ausnutzenden Meßverfahren durchgeführt wird, wobei die Form der Oberfläche des Meßobjektes (1) dadurch ermittelt wird, daß zwischen zwei Teilmessungen das Objekt im selben Zustand belassen und wenigstens ein beobachtungsseitiger Parameter, nämlich die optische Laufweglänge einer der die Oberfläche des Objekts beleuchtenden und von dort reflektierten Lichtwellen (28, 29) oder die Wellenlänge ($\lambda$) des verwendeten Lichts,verändert wird.

**2.** Verfahren nach Anspruch 1, wobei wenigstens teilweise die Verlagerung von Objektpunkten (7) der Oberfläche des Objekts (1) zwischen einem Ausgangszustand und einem Meßzustand relativ zueinander ermittelt wird, **dadurch gekennzeichnet, daß**

- die Form der Oberfläche des Objektes (1) mittels Speckle-Interferometrie gemessen wird, und

10

- aus der Form der Oberfläche des Objektes und der relativen Verlagerung von Objektpunkten (7) in drei unterschiedlichen Raumrichtungen zwischen Ausgangszustand und Meßzustand die Formänderung der Oberfläche des Objektes zwischen Ausgangszustand und Meßzustand, also das dreidimensionale Verlagerungsfeld, bestimmt wird.

3. Verfahren nach Anspruch 2,
**dadurch gekennzeichnet, daß**
die Form der Oberfläche des Objektes im Ausgangszustand ermittelt wird, und insbesondere die Verlagerung von Objektpunkten (7) zwischen Ausgangszustand und Meßzustand in Verlagerungskomponenten (dx, dy, dz), welche in Richtung der drei aufeinander lotrecht stehenden Raumrichtungen (x, y, z) liegen, mit Hilfe wenigstens dreier unterschiedlich gerichteter Beleuchtungen des Objektes ermittelt wird.

4. Verfahren nach einem der Ansprüche 2 bis 3,
**dadurch gekennzeichnet, daß**
das Verlagerungsfeld, welches in Form von Angabe der Verlagerungsparametern (dx, dy, dz) vorliegt, unter Berücksichtigung der Lage der Oberfläche in jedem einzelnen Objektpunkt (7, 7a, ...) in tangentiale Vektoren und lotrechte Vektoren bezüglich der Oberfläche für jeden Objektpunkt (7, 7a, ...) umgerechnet wird, und die Unterschiede zwischen tangentialen und lotrechten Vektoren zweier benachbarter Objektpunkte (7, 7a), welche die Dehnung repräsentieren, über die Objektoberfläche als Dehnungsfetd ermittelt wird, und insbesondere aus dem Dehnungsfeld unter Berücksichtigung der Materialparameter, die an jedem Objektpunkt (7, 7a, ...) des Beobachtungsbereiches (6) vorliegen, das Spannungsfeld ermittelt wird, welches die in jedem Punkt (7, 7a) der Oberfläche vorliegende Spannung wiedergibt.

5. Verfahren nach Anspruch 4,
**dadurch gekennzeichnet, daß**
das Spannungsfeld für jeden Objektpunkt (7, 7a, ...) des Beobachtungsbereiches (6) die Spannungen in Richtung der Oberfläche des Objekts enthält.

6. Verfahren nach einem der vorhergehenden Ansprüche, wobei die Verlagerung der Oberfläche des Meßobjektes (1) eine partielle Verformung der Oberfläche des Meßobjektes ist, welche mit einer Dehnung bzw. Schrumpfung des Meßobjektes (1) einhergeht,
**dadurch gekennzeichnet, daß**
die Meßeinheit (2) in einer für Ausgangszustand und Meßzustand identischen Relativlage zur Oberfläche des Meßobjekts (1) gehalten wird, indem insbesondere die Meßeinheit (2) direkt auf die Oberfläche des Meßobjekts (1) aufgesetzt wird.

7. Verfahren nach einem Ansprüche 1 bis 5,
**dadurch gekennzeichnet, daß**
zusätzlich die absolute Lage wenigstens eines Objektpunktes (7, 7a) der Oberfläche des Objekts (1) in wenigstens einem seiner Zustände, Ausgangszustand oder Meßzustand, ermittelt wird und daraus die absolute Lage der gesamten Oberfläche des Objekts (1) im Beobachtungsbereich sowohl für den Ausgangszustand als auch für den Meßzustand errechnet wird, und insbesondere die absolute Lage eines Objektpunktes (7) der Oberfläche des Objekts (1) ermittelt wird, indem die absolute Lage der Meßeinheit (2) im Raum ermittelt wird und die Relativlage des Objektpunktes (7) zur Meßeinheit (2) bestimmt wird.

8. Verfahren nach einem der vorhergehenden Ansprüche,
**dadurch gekennzeichnet, daß**
die Veränderung der Laufwegslänge durch Verschieben einer oder mehrerer Beleuchtungseinheiten, insbesondere Lasern (3), erfolgt.

9. Verfahren nach einem der vorhergehenden Ansprüche,
**dadurch gekennzeichnet, daß**
die Veränderung der Laufweglänge durch Verschieben eines oder mehrerer im Strahlengang der Objektwellen (28, 29) angeordneter Umlenkspiegel vor dem Auftreffen auf dem Meßobjekt (1), vorzugsweise quer zur Beobachtungsrichtung (9) bzw. Meßrichtung (10), erfolgt.

10. Verfahren nach Anspruch 9,
**dadurch gekennzeichnet, daß**

bei der Methode elektronischer Speckle-Interferometrie mittels der dualen Beleuchtung zur Veränderung der Laufweglänge die Umlenkspiegel (22, 23) quer zur Beobachtungsrichtung (9) um den gleichen Betrag nach rechts bzw. nach links bezüglich der Beobachtungsrichtung verlagert oder um den gleichen Betrag um eine Achse, die senkrecht auf der durch die Beobachtungsrichtung und Beleuchtungsrichtung aufgespannte Meßebene liegen, verschwenkt werden.

**11.** Verfahren nach einem der vorhergehenden Ansprüche,
**dadurch gekennzeichnet, daß**
die Veränderung der Laufweglänge durch Änderung der Wellenlänge des verwendeten Laserlichts erfolgt.

**12.** Meßeinheit zur dreidimensionalen Ermittlung der Form und Verlagerung wenigstens eines Teils der Oberfläche eines Meßobjektes (1), insbesondere zur Durchführung des Verfahrens nach einem der vorhergehenden Ansprüche, wobei die Meßeinheit (2)

- ein Speckle-Interferometer mit
- wenigstens einem Laser (3),
- wenigstens drei verschiedene Beleuchtungsrichtungen (8a, 8b, 8c) zur Erzeugung von Objektstrahlen,
- eine Kamera (4) mit einer lichtempfindlichen Fläche (16) umfaßt,

wobei die Meßeinheit (2) eine Recheneinheit zur Auswertung der Aufnahmen der Kamera sowie ein Anzeigeelement zum Anzeigen der Auswertungsergebnisse umfaßt,
**dadurch gekennzeichnet, daß**

- wenigstens zwei Beleuchtungsrichtungen (8a, 8b) definiert, insbesondere gleichsinnig bezüglich der Beobachtungsrichtung (9) der Kamera (4), verlagerbar sind, und insbesondere
- die neben den beiden symmetrisch zur Beobachtungsrichtung (9) angeordneten Beleuchtungsrichtungen (8a, 8b) vorhandene Beleuchtungsrichtung (8c) in einer senkrecht auf der durch die Beleuchtungsrichtungen (8a, 8b) aufgespannten Ebene liegt.

**13.** Meßeinheit nach einem der Ansprüche 11 bis 12,
**dadurch gekennzeichnet, daß**
die Verlagerung der Beleuchtungsrichtungen (8a, 8b) durch einen gemeinsamen oder mehrere separate, gemeinsam ansteuerbare, Schrittmotoren oder piezogetriebene Translatoren erfolgt.

**14.** Meßeinheit nach einem der Ansprüche 11 bis 13,
**dadurch gekennzeichnet, daß**
der Laser (3) in seiner Wellenlänge veränderbar ist

**15.** Meßeinheit nach einem der Ansprüche 11 bis 14,
**dadurch gekennzeichnet, daß**
die Meßeinheit (2) mindestens einen Fuß (31, 32, 33) zum Aufsetzen auf die Oberfläche des Meßobjektes (1) in einer definierten Position bezüglich der Oberfläche aufweist.

**16.** Meßeinheit nach einem der Ansprüche 11 bis 15,
**dadurch gekennzeichnet, daß**
die Meßeinheit (2) drei nicht auf einer Linie liegende, vorzugsweise in Form eines gleichschenkligen Dreiecks angeordnete, Füße (31, 32, 33) aufweist.

**17.** Meßeinheit nach einem der Ansprüche 11 bis 16,
**dadurch gekennzeichnet, daß**
die Meßeinheit (2) an einer definierten Stelle des Raumes angeordnet ist und eine Meßvorrichtung (2) zur Ermittlung des Abstandes und der Richtung wenigstens eines Objektpunktes (7) der Oberfläche des Meßobjektes (1) relativ zur Meßeinheit (2) umfaßt.

**Claims**

**1.** A method of determining the displacement of at least a part of the surface of a measurement object (1) between an initial condition and a measurement condition and the shape of said surface of the measurement object,

**characterised in that** the operation of determining the shape and the operation of determining the displacement are effected with the same measurement method utilising the speckle effect, wherein the shape of the surface of the measurement object (1) is determined **in that** between two partial measurement operations the object is left in the same condition and at least one viewing-side parameter, namely the optical travel path length of one of the light waves (28, 29) illuminating the surface of the object and reflected therefrom or the wavelength ($\lambda$) of the light used, is altered.

2. A method according to claim 1

wherein at least in part the displacement of object points (7) of the surface of the object (1) between an initial condition and a measurement condition relative to each other is ascertained,

**characterised in that**

- the shape of the surface of the object (1) is measured by means of speckle interferometry, and
- the variation in shape of the surface of the object between the initial condition and the measurement condition, that is to say the three-dimensional displacement field, is ascertained from the shape of the surface of the object and the relative displacement of object points (7) in three different directions in space between the initial condition and the measurement condition.

3. A method according to claim 2

**characterised in that** the shape of the surface of the object is determined in the initial condition and in particular the displacement of object points (7) between an initial condition and a measurement condition is ascertained in displacement components (dx, dy, dz) which are in the direction of the three mutually perpendicular directions (x, y, z) in space by means of at least three differently directed illuminations of the object.

4. A method according to one of claims 2 and 3

**characterised in that** the displacement field which occurs in the form of specifying displacement parameters (dx, dy, dz) is converted having regard to the position of the surface in each individual object point (7, 7a,...), into tangential vectors and perpendicular vectors with respect to the surface for each object point (7, 7a,...) and the differences between tangential and perpendicular vectors of two adjacent object points (7, 7a) which represent the elongation involved are determined over the object surface as an elongation field, and in particular there is ascertained from the elongation field, having regard to the material parameters which obtain at each object point (7, 7a,...) of the viewing region (6), the stress field which represents the stress obtaining in each point (7, 7a) of the surface.

5. A method according to claim 4

**characterised in that** the stress field for each object point (7, 7a) of the viewing region (6) contains the stresses in the direction of the surface of the object.

6. A method according to one of the preceding claims

wherein the displacement of the surface of the measurement object (1) is a partial deformation of the surface of the measurement object, which involves elongation or shrinkage of the measurement object (1),

**characterised in that** the measurement unit (2) is held in a relative position with respect to the surface of the measurement object (1), which relative position is identical for the initial condition and the measurement condition by in particular the measurement unit (2) being put directly on to the surface of the measurement object (1).

7. A method according to one of claims 1 to 5

**characterised in that** in addition the absolute position of at least one object point (7, 7a) of the surface of the object (1) is ascertained in at least one of its conditions, the initial condition or the measurement condition, and the absolute position of the entire surface of the object (1) in the viewing region is calculated therefrom both for the initial condition and also for the measurement condition, and in particular the absolute position of an object point (7) of the surface of the object (1) is determined by determining the absolute position of the measurement unit (2) in space and ascertaining the relative position of the object point (7) with respect to the measurement unit (2).

8. A method according to one of the preceding claims

**characterised in that** the variation in the travel path length is effected by displacing one or more illumination units, in particular lasers (3).

9.   A method according to one of the preceding claims
**characterised in that** the variation in the travel path length is effected by displacing one or more deflection mirrors arranged in the beam path of the object waves (28, 29) upstream of impingement on the measurement object (1), preferably transversely with respect to the viewing direction (9) or the measurement direction (10) respectively.

10.   A method according to claim 9
**characterised in that** in the method of electronic speckle interferometry by means of dual illumination for varying the travel path length the deflection mirrors (22, 23) are displaced transversely with respect to the viewing direction (9) by the same amount towards the right or towards the left with respect to the viewing direction or are pivoted by the same amount about an axis which is perpendicular to the measurement plane defined by the viewing direction and the illumination direction.

11.   A method according to one of the preceding claims
**characterised in that** the variation in the travel path length is effected by altering the wavelength of the laser light used.

12.   A measurement unit for three-dimensionally determining the shape and displacement of at least a part of the surface of a measurement object (1), in particular for carrying out the method according to one of the preceding claims,
wherein the measurement unit (2) includes

a speckle interferometer having

at least one laser (3),
at least three different illumination directions (8a, 8b, 8c), for producing object beams, and
a camera (4) having a light-sensitive surface (16),

wherein the measurement unit (2) has a calculation unit for evaluating the recordings of the camera and a display element for displaying the evaluation results,
**characterised in that**

at least two illumination directions (8a, 8b) are displaceable definedly, in particular in the same direction with respect to the viewing direction (9) of the camera (4), and in particular
the illumination direction (8c) which is provided beside the two illumination directions (8a, 8b) arranged symmetrically relative to the viewing direction (9) is in a plane perpendicular to that defined by the illumination directions (8a, 8b).

13.   A measurement unit according to one of claims 11 and 12
**characterised in that** displacement of the illumination directions (8a, 8b) is effected by a common or a plurality of separate, jointly actuable stepping motors or piezoelectrically driven translators.

14.   A measurement unit according to one of claims 11 to 13
**characterised in that** the laser (3) is variable in its wavelength.

15.   A measurement unit according to one of claims 11 to 14
**characterised in that** the measurement unit (2) has at least one foot (31, 32, 33) for putting on to the surface of the measurement object (1) in a defined position with respect to the surface.

16.   A measurement unit according to one of claims 11 to 15
**characterised in that** the measurement unit (2) has three feet (31, 32, 33) which are not disposed on a line and which are preferably arranged in the form of an isosceles triangle.

17.   A measurement unit according to one of claims 11 to 16
**characterised in that** the measurement unit (2) is arranged at a defined location in space and includes a measurement device (2) for determining the spacing and the direction of at least one object point (7) of the surface of the measurement object (1) relative to the measurement unit (2).

**Revendications**

1. Procédé pour la détermination du déplacement d'au moins une partie de la surface d'un objet de mesure (1) entre un état de départ et un état de mesure ainsi que la forme de cette surface de l'objet de mesure, **caractérisé en ce que** la détermination de la forme et la détermination du déplacement sont exécutées avec le même procédé de mesure exploitant l'effet Speckle, la forme de la surface de l'objet de mesure (1) étant définie par le fait qu'entre deux mesures partielles, l'objet est laissé dans le même état et au moins un paramètre côté observation est modifié, notamment la longueur optique de parcours de l'une des ondes lumineuses (28, 29) éclairant la surface de l'objet et de là réfléchissant ou la longueur d'onde ($\lambda$) de la lumière utilisée.

2. Procédé selon la revendication 1, où au moins partiellement le déplacement de points d'objets (7) de la surface de l'objet (1) est déterminé entre un état de sortie et un état de mesure de manière relative entre eux, **caractérisé en ce que**

   - la forme de la surface de l'objet (1) est mesurée au moyen de l'interférométrie Speckle, et
   - à partir de la forme de la surface de l'objet et du déplacement relatif de points d'objets (7) dans trois directions spatiales différentes entre l'état initial et l'état de mesure, la modification de forme de la surface de l'objet est déterminée entre l'état initial et l'état de mesure donc le champ de déplacement tridimensionnel.

3. Procédé selon la revendication 2, **caractérisé en ce que** la forme de la surface de l'objet est déterminée dans l'état initial et en particulier le déplacement de points d'objet (7) entre l'état initial et l'état de mesure est défini à l'aide d'au moins trois éclairages de l'objet dirigé dans des directions différentes, exprimé dans des composantes de déplacement (dx, dy, dz) qui se trouvent dans la direction des trois directions spatiales (x, y, z)perpendiculaires entre elles.

4. Procédé selon l'une des revendications 2 à 3, **caractérisé en ce que** le champ de déplacement qui se trouve sous forme de paramètres de déplacement (dx, dy, dz) est converti en tenant compte de la position de la surface dans chaque point d'objet séparé (7, 7a) en vecteurs tangentiels et vecteurs perpendiculaires par rapport à la surface pour chaque point d'objet (7, 7a...), et les différences entre les vecteurs tangentiels et perpendiculaires de deux points d'objet voisins (7, 7a) qui représentent l'allongement sont déterminées sur la surface d'objet en tant que champ d'allongement et en particulier à partir du champ d'allongement en tenant compte des paramètres de matière qui se trouvent sur chaque point d'objet (7, 7a...) de la zone d'observation (6), le champ de tension est défini lequel reflète la tension régnant dans chaque point (7, 7a) de la surface.

5. Procédé selon la revendication 4, **caractérisé en ce que** le champ de tension pour chaque point d'objet (7, 7a,...) de la zone d'observation (6) contient des tensions dans la direction de la surface de l'objet.

6. Procédé selon l'une des revendications précédentes, où le déplacement de la surface de l'objet de mesure (1) est une déformation partielle de la surface de l'objet de mesure qui s'accompagne d'une extension respectivement d'une rétraction de l'objet de mesure (1), **caractérisé en ce que** l'unité de mesure (2) est maintenue dans une position relative identique pour l'état initial et l'état de mesure par rapport à la surface de l'objet de mesure (1), dans le fait qu'en particulier l'unité de mesure (2) est placée directement sur la surface de l'objet de mesure (1).

7. Procédé selon l'une des revendications 1 à 5, **caractérisé en ce qu'**en supplément la position absolue d'au moins un point d'objet (7, 7a) de la surface de l'objet (1) est définie dans au moins l'un des états, état initial ou état de mesure et à partir de là la position absolue de la surface totale de l'objet (1) est calculée dans la zone d'observation aussi bien pour l'état initial qu'également pour l'état de mesure, et en particulier la position absolue d'un point d'objet (7) de la surface de l'objet (1) est définie dans le fait que la position absolue de l'unité de mesure (2) est déterminée dans l'espace et la position relative du point d'objet (7) est déterminée par rapport à l'unité de mesure (2).

8. Procédé selon l'une des revendications précédentes, **caractérisé en ce que** la modification de la longueur de parcours s'effectue par déplacement d'une ou de plusieurs unités d'illumination, en particulier des lasers (3).

9. Procédé selon l'une des revendications précédentes,

**caractérisé en ce que** la modification de la longueur de parcours s'effectue par déplacement d'un ou de plusieurs miroirs de déflexion disposés dans la marche de rayon des ondes d'objet (28, 29 avant l'impact sur l'objet de mesure(1), de préférence transversalement au sens d'observation (9) respectivement le sens de mesure (10).

10. Procédé selon la revendication 9, **caractérisé en ce qu'**avec la méthode de l'interférométrie électronique Speckle au moyen de l'éclairage double pour la modification de la longueur du parcours, les miroirs de déviation (22, 23) sont déplacés transversalement au sens d'observation (9) du même montant vers la droite ou vers la gauche par rapport à la direction d'observation ou sont basculés du même montant autour d'un axe qui se trouve perpendiculairement sur le plan de mesure étendu par la direction d'observation et la direction d'illumination.

11. Procédé selon l'une des revendications précédentes,
**caractérisé en ce que** la modification de la longueur de parcours s'effectue par modification de la longueur d'onde de la lumière laser utilisée.

12. Unité de mesure pour la détermination tridimensionnelle de la forme et du déplacement d'au moins un partie de la surface d'un objet de mesure (1) en particulier pour l'exécution du procédé selon l'une des revendications précédentes, l'unité de mesure (2) comprenant

   - un interféromètre Speckle
   - avec au moins un laser (3),
   - au moins trois directions différentes d'éclairage (8a, 8b, 8c) pour la génération de rayons d'objet,
   - une caméra (4) avec une surface photosensible (16), l'unité de mesure (2) comprenant une unité de calcul pour l'analyse des prises de vue de la caméra ainsi qu'un élément d'affichage pour l'affichage des résultats d'analyse,

   **caractérisée en ce**

   - **qu'**au moins deux directions d'éclairage (8a, 8b) sont définies, sont déplaçables en particulier dans le même sens par rapport à la direction d'observation (9) de la caméra (4) et en particulier
   - la direction d'éclairage (8c) existant à côté des deux directions d'éclairage (8a, 8b) disposées symétriquement à la direction d'observation (9) se trouve dans un plan étendu perpendiculairement à travers les directions d'éclairage (8a, 8b).

13. Unité de mesure selon l'une des revendications 11 à 12, **caractérisée en ce que** le déplacement des directions d'éclairage (8a, 8b) s'effectue par un moteur pas à pas commun ou plusieurs moteurs pas à pas séparés à commande commune ou un répéteur à entraînement piézo.

14. Unité de mesure selon l'une des revendications 11 à 13, **caractérisée en ce que** le laser (3) est modifiable dans sa longueur d'onde.

15. Unité de mesure selon l'une des revendications 11 à 14, **caractérisée en ce que** l'unité de mesure (2) présente au moins un pied (31, 32, 33) pour la mise en place sur la surface de l'objet de mesure (1) dans une position définie par rapport à la surface.

16. Unité de mesure selon l'une des revendications 11 à 15, **caractérisée en ce que** l'unité de mesure (2) présente trois pieds (31, 32, 33) non disposés sur une ligne de préférence sous forme d'un triangle isocèle.

17. Unité de mesure selon l'une des revendications 11 à 15, **caractérisée en ce que** l'unité de mesure (2) est disposée à un endroit défini de la pièce et un dispositif de mesure (2) pour la détermination de la distance et la direction d'au moins d'un point d'objet (7) de la surface de l'objet de mesure (1) dé manière relative par rapport à l'unité de mesure (2).

Fig. 1a

Fig. 1b

Φ+Δ

EP 1 012 534 B1

# Fig. 1c

$$\begin{pmatrix} e_{1x} & e_{1y} & e_{1z} \\ e_{2x} & e_{2y} & e_{2z} \\ e_{3x} & e_{3y} & e_{3z} \end{pmatrix} \begin{pmatrix} dx \\ dy \\ dz \end{pmatrix} = \begin{pmatrix} N_1 \lambda_1 \\ N_2 \lambda_2 \\ N_3 \lambda_3 \end{pmatrix}$$

# Fig. 2d

EP 1 012 534 B1

Fig. 2a

Fig. 2b

Fig. 2c

Fig. 3

**Fig. 4**

EP 1 012 534 B1

Fig. 5

in Messrichtung 10a

in Messrichtung 10b

**Fig. 6**

EP 1 012 534 B1

# Fig. 7

# Fig. 8